Europäisches Patentamt

(19) European Patent Office

Office européen des brevets

(11) Publication number : **0 246 332 B1**

(12) **EUROPEAN PATENT SPECIFICATION**

(45) Date of publication of patent specification :
03.04.91 Bulletin 91/14

(51) Int. Cl.⁵ : **B23H 7/10, B23H 7/02**

(21) Application number : **86906926.0**

(22) Date of filing : **12.11.86**

(86) International application number :
**PCT/JP86/00578**

(87) International publication number :
**WO 87/02920 21.05.87 Gazette 87/11**

(54) WIRE GUIDE FOR ELECTRIC DISCHARGE WIRE CUTTING.

(30) Priority : **14.11.85 JP 175827/85 U**

(43) Date of publication of application :
**25.11.87 Bulletin 87/48**

(45) Publication of the grant of the patent :
**03.04.91 Bulletin 91/14**

(84) Designated Contracting States :
**CH DE FR GB LI**

(56) References cited :
**JP-A-58 186 534**
**JP-A-59 156 626**

(73) Proprietor : **FANUC LTD.**
**3580, Shibokusa Aza-Komanba, Oshino-mura Minamitsuru-gun, Yamanashi 401-05 (JP)**

(72) Inventor : **OBARA, Haruki**
**844-7, Hashimoto**
**Sagamihara-shi Kanagawa 229 (JP)**

(74) Representative : **Jackson, Peter Arthur et al Gill Jennings & Every, 53-64 Chancery Lane London WC2A 1HN (GB)**

## Description

This invention relates to an improvement applicable to a wire guide for wire electrode type electrical discharge machining. More specifically, this invention relates to an improvement applicable to a wire guide for wire electrode type electrical discharge machining, for the purpose to enable the wire guide to be employed both for taper machining and for non-taper machining with high machining accuracy, regardless of the magnitude of the taper angle thereof and to enable the wire guide to be readily attached by (or threaded with) a wire electrode and additionally to enable the wire guide to be employed for a wire electrode type electrical discharge machining equipment equipped with an automatic wire electrode connecting (or threading) system.

Wire guides for wire electrode type electrical discharge machining available in the prior art arc classified into some models described below.

### a. V-groove guide

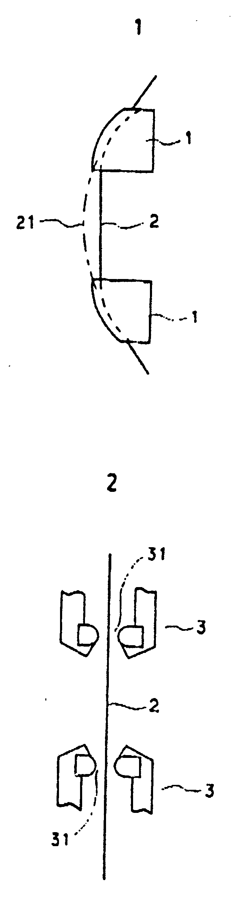

As shown by a numeral 1 in Fig. 1, V-groove guide has a V-shaped groove along which a wire electrode 2 is guided. Although this wire guide 1 in readily attached by (or threaded with) a wire electrode 2, or although it is easy to attach a wire electrode 2 to this guide 1, this V-groove guide is not suitable for taper machining.

### b. Die guide

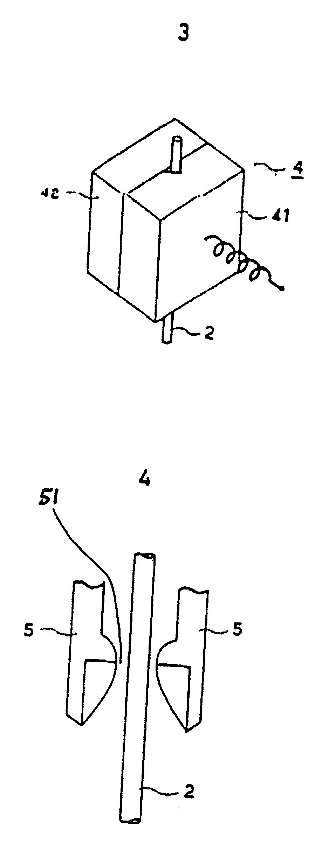

As shown by a numeral 3 in Fig. 2, a die guide has an aperture 31 through which a wire electrode 2 passes. The die guide 3 is suitable for taper machining.

### c. Three-point-supporting guide

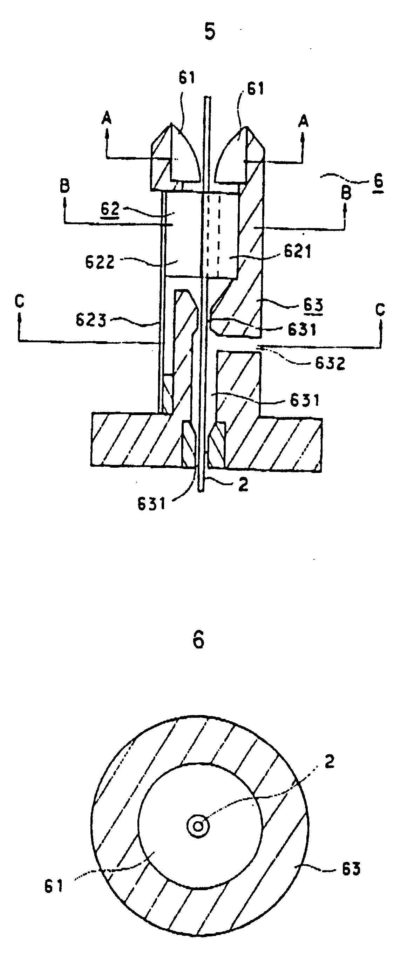

As shown by a numeral 4 in Fig. 3, three-point-supporting guide is a combination of a V-groove guide member 41 and a supporting guide member 42. This three-point-supporting guide 4 has a feature to support a wire guide 2 accurately at a required location during a period in which a machining is conducted and to be readily attached by (or threaded with) a wire electrode 2 by moving the supporting guide member 42 apart from the V-groove guide member 41, when a wire electrode 2 is attached thereby (or threaded therewith).

### d. Arc-shaped guide

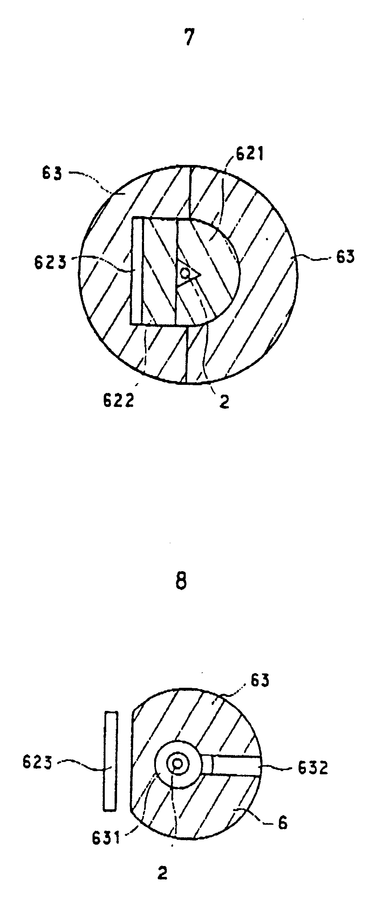

As shown by a numeral 5 in Fig. 4, an arc-shaped guide is a type of die guide of which the radius of curvature of the surface of the aperture 51 is extremely large. This arc-shaped guide 5 has a feature not to cause a wire electrode 2 to be sharply bent, even if the taper angle is large, resultantly causing no large magnitude of friction to be applied to the wire electrode 2.

Each of the aforementioned wire guides for wire electrode type electrical discharge machining available in the prior art is accompanied by the following drawbacks.

(a) In addition to the aforementioned drawback wherein it is not suitable for taper machining, the V-groove guide is involved with a drawback wherein the wire electrode 2 is deformed as shown by a chain line 21 shown in Fig. 1, resultantly deteriorating the machining accuracy.

(b) Since the radius of curvature of the die guide 3 is inclined to be selected somewhat small, the die guide is involved with a drawback wherein the wire electrode 2 is sharply bent.

(c) If the taper angle is large, the three-point-supporting guide 4 is involved with a drawback wherein the wire electrode 2 is inclined to be curled. This is because a large magnitude of taper angle causes the wire electrode 2 to be sharply bent.

(d) If the diameter of the aperture 51 is selected small, the arc-shaped guide 5 is not involved with any particular drawback, insofar as the machining accuracy in the taper machining is concerned. However, an arc-shaped guide 5 having a small aperture 51 is involved with a drawback wherein an automatic wire connecting system (or an automatic threading system) can not be employed.

The object of this invention is to provide a wire guide employable for wire electrode type electrical discharge machining having the following features.

a. It can be employed not only for non-taper machining but also for taper machining with high accuracy,

b. It can ralize high accuracy for taper machining, regardless of the taper angle,

c. It can readily be attached by (or threaded with) a wire electrode, and

d. It can be employed for a wire electrode type electrical discharge machining equipped with an automatic wire connecting (or threading) system.

To achieve the above object, a wire guide employable for wire electrode type electrical discharge machining and in accordance with this invention, is provided with an arc-shaped guide which is arranged at a location concentric with a wire electrode, a three-point-supporting guide which is arranged closely to the arc-shaped guide along the wire electrode for allowing the wire electrode to pass therethrough, an external tube member for holding the arc-shaped guide and the three-point-supporting guide therein, having a center hole for allowing the wire electrode to pass therethrough and having a cooling liquid supply hole for supplying a cooling liquid for cooling the wire electrode.

This wire guide for wire electrode type electrical discharge machining functions as an arc-shaped guide, when the taper angle is large, and functions as a three-point-supporting guide, when the taper angle is small. As a result, either of these two guides is automatically selected depending on the taper angle, and a high level of machining accuracy is realized, regardless of the magnitude of the taper angle.

When this wire guide is employed for non-taper machining, this wire guide functions as a three-point-supporting guide, realizing a high level of machining accuracy. As a result, this wire guide causes a high magnitude of machining accuracy both for taper machining and for non-taper machining.

When this wire guide is attached by (or threaded with) a wire electrode, the three-point-supporting guide allows the supporting guide member to remove apart from the V-groove guide member to make the gap therebetween large. In addition, the diameter of the aperture of the arc-shaped guide is selected relatively large. These two parameters allow the wire guide of this invention to be readily threaded with the wire electrode. As a result, this wire guide can be employed for a wire electrode type electrical discharge machining equipment provided with an automatic wire connecting (or threading) system.

A more detailed description will be presented below for a wire guide for wire electrode type electrical discharge machining, referring to drawings tabulated below :

Fig. 1 is a side view of a V-groove guide available in the prior art,

Fig. 2 is a side view of a die guide available in the prior art,

Fig. 3 is a perspective view of a thee-point-supporting guide available in the prior art,

Fig. 4 is a side view of an arc-shaped guide available in the prior art,

Fig. 5 is a cross-sectional view of a wire guide for wire electrode type electrical discharge machining in accordance with an embodiment of this invention,

Fig. 6 is a A-A cross-sectional view of a wire guide for wire electrode type electrical discharge machining illustrated in Fig. 5,

Fig. 7 is a B-B cross-sectional view of a wire guide for wire electrode type electrical discharge machining illustrated in Fig. 5,

Fig. 8 is a C-C cross-sectional view of a wire guide for wire electrode type electrical discharge machining illustrated in Fig. 5, and

Fig. 9 is a cross-sectional view of a wire guide for wire electrode type electrical discharge machining in accordance with an embodiment of this invention, while it is employed.

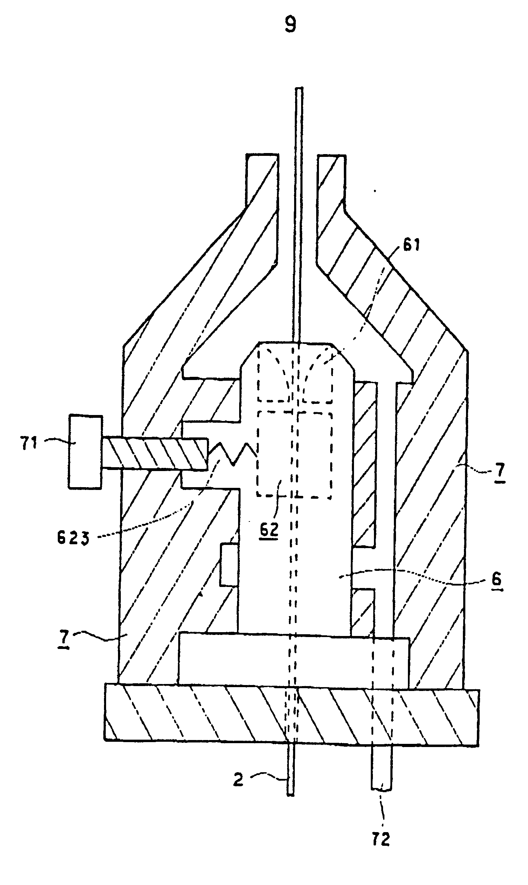

Referring to Figs. 5, 6, 7 and 8, a more detailed description will be presented below.

Referring to Figs. 5 and 6, an arc-shaped guide 61 is assembled in an external tube 63. The arc-shaped guide 61 has a center hole whose diameter is selected to be larger (by for example 0.1 mm) than the diameter (usually 0.05-0.3 mm) of a wire electrode 2, for the purpose to enable the arc-shaped guide 61 to be readily attached by (or threaded with) the wire electrode 2.

Referring to Figs. 5 and 7, a three-point-supporting guide 62 is assembled in the external tube 63 closely to the arc-shaped guide 61. The three-point-supporting guide 62 consists of a V-groove guide member 621, a supporting guide member 622 and a spring 623 (shown as a leaf spring in the drawing). When the wire guide 6 is employed, the supporting guide member 622 is urged towards the V-groove guide member 621 by a spring tension adjustment means which is shown by a numeral 71 in Fig. 9, against the tension of the spring 623. As a result, the wire electrode 2 is held accurately at the center of the center hole 631 of the wire guide 6. On the other hand, when the wire guide 6 is attached by (or threaded with) the wire electrode 2, the spring tension adjustment means 71 shown in Fig. 9 is loosend, and the supporting guide member 622 is removed apart from the V-groove guide member 621. As a result, the wire guide 6 can be easily attached by (or threaded with) the wire electrode 2.

Referring to Figs. 5 and 8, the external tube 63 functions to hold the V-groove guide member 621 at an accurate position relative to the supporting guide member 622, in addition to a function to allow the wire electrode 2 to pass through the internal hole 631 and to supply a cooling liquid through a cooling liquid supply hole 632.

Referring to Fig. 9, when the wire guide 6 for wire electrode type electrical discharge machining is employed, the wire guide 6 in arranged in a nozzle 7 having the spring tension adjustment means which adjusts the tension of the spring 623 (A coil spring is shown in Fig. 9.), before a cooling liquid is supplied through the cooling liquid supply hole 72 and the wire electrode 2 is arranged as shown in Fig. 9.

The foregoing description has clarified that this invention has successfully provided a wire guide employable for wire electrode type electrical discharge machining having the following features.

a. The wire guide functions as an arc-shaped guide, when the taper angle is large and functions as a three-point-supporting guide, when the taper angle is small.

b. As a result, either an arc-shaped guide or a three-point-supporting guide is automatically selected depending on the taper angle, resultantly enabling the wire guide to be employed not only for non-taper machining but also for taper machining with high accuracy,

c. It can realize high accuracy for taper machining, regardless of the taper angle,

d. It can readily be attached by (or threaded with) a wire electrode, and

e. It can be employed for a wire electrode type electrical discharge machining equipped with an automatic wire connecting (or threading) system.

## Claims

1. A wire guide for wire electrode type electrical discharge machining comprising :

an arc-shaped guide (61) arranged at a location concentric with a wire electrode (2) for electrical discharge machining,

a three-point-supporting guide (62) arranged closely to said arc-shaped guide (61) along said wire electrode (2) for allowing said wire electrode (2) to pass therethrough, and

an external tube member (63) for holding said arc-shaped guide (61) and said three-point-supporting guide (62) therein, and having a center hole (631) for allowing said wire electrode (2) to pass therethrough, and having a cooling liquid - :pply hole (632) for supplying a cooling liquid for cooling said wire electrode (2).

## Ansprüche

1. Drahtführung für Drahtelektroden-Elektroentladungsbearbeitung, umfassend :

eine bogenförmige Führung (61), die an einer Stelle konzentrisch zu einer Drahtelektrode (2) zur Elektroentladungsbearbeitung angeordnet ist,

eine Drei-Punkt-Führung (62), die dicht neben der bogenförmigen Führung (61) entlang der Drahtelektrode (2) angeordnet ist, damit die Drahtelektrode (2) durch sie hindurchtreten kann, und

ein äußeres Rohrteil (63) zur Aufnahme der bogenförmigen Führung (61) und der Drei-Punkt-Führung (62), welches ein Zentrumsloch (631) aufweist, damit die Drahtelektrode (2) durch dieses hindurchtreten kann, und welches eine Kühlmittelzuführbohrung (632) zur Zufuhr einer Kühlflüssigkeit zur Kühlung der Drahtelektrode aufweist.

## Revendications

1. Un guide-fil destiné au découpage par fil à électro-érosion comprenant :

un guide en forme d'arc (61) disposé en un emplacement concentrique à une électrode en fil (2) en vue d'un découpage par électroérosion,

un guide de support en trois points (62) disposé au voisinage dudit guide en forme d'arc (61) le long de ladite électrode en fil (2) pour permettre à ladite électrode en fil (2) de le traverser, et

un organe tubulaire extérieur (63) destiné à maintenir en lui-même ledit guide en forme d'arc (61) et ledit guide de support en trois points (62), et comportant un trou central (631) pour permettre à ladite électrode en fil (2) de le traverser, et comportant un trou (632) d'amenée de liquide de refroidissement pour amener un liquide de refroidissement afin de refroidir ladite électrode en fil (2).

1

2

3

4

5

6

7

63    621

623    63

622    2

8

63

623    632

631    6

2

9